(19) Europäisches Patentamt
European Patent Office
Office européen des brevets

(11) **EP 2 274 867 B1**

(12) **EUROPEAN PATENT SPECIFICATION**

(45) Date of publication and mention
of the grant of the patent:
**11.09.2019 Bulletin 2019/37**

(51) Int Cl.:
*H04L 9/06* (2006.01)     *H04L 9/08* (2006.01)
*H04L 29/06* (2006.01)

(21) Application number: **09728356.8**

(22) Date of filing: **25.03.2009**

(86) International application number:
**PCT/GB2009/000793**

(87) International publication number:
**WO 2009/122141 (08.10.2009 Gazette 2009/41)**

(54) **KEYS FOR PROTECTING USER ACCESS TO MEDIA**

SCHLÜSSEL ZUM SCHUTZ DES BENUTZERZUGANGS ZU MEDIEN

CLÉS POUR PROTÉGER UN ACCÈS D'UTILISATEUR À UN CONTENU MULTIMÉDIA

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **31.03.2008 GB 0805830**

(43) Date of publication of application:
**19.01.2011 Bulletin 2011/03**

(73) Proprietor: **British Telecommunications public limited company**
**London EC1A 7AJ (GB)**

(72) Inventors:
• **KHAN, Afnan, Ullah**
**Suffolk IP2 8AH (GB)**
• **DIMITRAKOS, Theo**
**Essex CO1 1AJ (GB)**

(74) Representative: **British Telecommunications public limited company**
**Intellectual Property Department**
**Ground Floor, Faraday Building**
**1 Knightrider Street**
**London EC4V 5BT (GB)**

(56) References cited:
WO-A1-2007/049267     US-A- 5 903 649
US-A1- 2006 029 226     US-A1- 2007 140 480
US-B1- 7 260 716

• TAN C: "SECURITY ANALYSIS OF JOINT GROUP KEY AGREEMENT PROTOCOL" IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E90A, no. 9, 1 September 2007 (2007-09-01), pages 1876-1878, XP001508722 ISSN: 0916-8508
• "Chapter 12: Key Establishment Protocols ED - MENEZES A; OORSCHOT VAN P; VANSTONE S" [Online] 1 October 1996 (1996-10-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 489 - 541 , XP001525012 Retrieved from the Internet: URL:http://www.cacr.math.uwaterloo.ca/hac/ > page 524 - page 528

**Description**

This invention relates to a method and apparatus for generating keys for broadcasts, in particular but not exclusively to, a method and apparatus for regenerating keys for the encryption of video from a video source and scaleable video scenario.

It is becoming increasingly popular to broadcast media such as video by unconventional means and in particular over the internet. This has led to problems with security.

For various reasons it is often preferred for media such as video to be sent in encrypted format even if it is not considered particularly confidential. Commonly this is done because it is wished that only paying subscribers are able to access the video and it is wished to prevent non-paying parties from accessing the video for free. Conventional encryption techniques such as those used for satellite broadcast TV are often based on the premise that each subscriber is likely to be a long term subscriber and that they may have to invest in new hardware such as a set top box to subscribe. In those circumstances it may simply be possible to provide a single encryption key to each subscriber. New problems arise however in models such as Internet distribution of video where subscribers may wish to subscribe quickly and simply to for example watch a single video and then unsubscribe immediately afterwards. Since each subscriber in encryption models generally has access to some form to the key required to decrypt the video, suitable systems are required for encryption is suited to situations where these new users may instantly need a key but they may unsubscribe rapidly afterwards. It is desirable for the provider of the encrypted video system to prevent the ex-subscribers from still being able to decrypt the video with any keys they were provided with during their brief subscription period.

It has also recently become known to use broadcast video with a system known as scalable video. This allows a video source to transmit a video with a number of component parts including a base and a trail allowing its resolution to be scaled up or scaled down depending on the needs of an end user. The base contains video information that is of a very low resolution quality. The trail layer or trail layers is/are used to enhance resolution and quality of the video.

Typically scalability servers are provided between the video server and the end users with end users of a particular requirement such as a specific low resolution connected to the same scalability server. The scalability server can take the unsealed video from the video server and scale it appropriately to its particular end users. In such systems there may be no direct contact between broadcaster and end user which causes additional problems for encryption especially if symmetric encryption is used with the end user uses needing the same key to decrypt that the video source using to encrypt..

For the purposes of this invention it is preferable to only encrypt the base component of scalable video packets. This allows for a simpler system with less information being encrypted. However, it is still completely effective since without the base the trail layers are completely useless.

Scalable video presents even more difficulties for encryption protocols, for encryption itself and more particularly for key distribution.

US5903649 describes a method for establishing a common code through a central office to provide security in the transmission of a broadcast program subject to fees. The invention is based on a combination of a code-controlled one-way function with two arguments k and a, where k can be considered as a code, and an (n,t) threshold scheme in which the code k can be decomposed into parts, called shadows, so that this code can be reconstructed from any n of the shadows. Each authorised participant has a personal code Ki, known only to the participant in question and the central office. An (n,t) threshold scheme is then built from the totality of shadows obtained from the personal codes of the authorised participant. The central office then calculates a common code from the set of shadows. The central office then sends to each participant, through an insecure channel, the data needed for establishing the common code (these data including a common set of shadows of the threshold scheme). Then the authorised participants calculate their individual shadows from their own personal code. Then, by using their own individual shadows and the received set of shadows, the authorised participants derive the common code. In this way, a common code can be established and shared securely without the need to use secure encryption to transfer the common code between the central office and the authorised participants.

WO2007/049267 describes a system for restricting access to encrypted content stored in a consuming device (such as a PVR) which is part of a network including other devices such as security servers or other static devices. The system is intended to make protected content readable only when the consumer device is connected to an authorised network - so that stealing one or more PVRs does not enable protected content to be accessed. Decryption keys and or entitlement control messages are stored in the network on the security servers or other static devices, and these are made available to the PVR only when it is part of the network. In one embodiment, a content provider prepares secret shares (in accordance with Shamir's Secret Sharing approach) which it then encrypts. The secret shares are encrypted for decryption only by the static devices and not by the consuming device. These encrypted shares are then passed to the consuming device which then sends them on to the static devices. When the consuming device wants to use/play the protected content, the static devices decrypt the encrypted secret shares to reveal decrypted secret shares which are then sent to the consuming device for reconstruction of the decryption key or the entitlement control message.

Instead of the encrypted secret shares being sent first to the consuming device, they may be broadcast directly to the static devices for use as described above.

It is an object of this invention to mitigate at least some of the above problems and to provide an efficient low cost and/or to provide an effective protocol for key distribution, in particular, but not exclusively, for scalable video.

According to the first aspect of the invention there is provided a broadcasting server connectable to a plurality of user devices and connectable to or comprising a key distribution centre, the broadcasting server comprising a processor and a memory, the broadcasting server being configured to generate an encryption key and a plurality of key parts which together form the encryption key, and/or the memory of the broadcasting server includes an encryption key and a plurality of key parts which together form the encryption key, wherein multiple key parts are needed to generate a decryption key identical to the encryption key to decrypt data encrypted by the encryption key; the broadcasting server or key distribution centre being configured to: send each one of the multiple key parts to at least one corresponding user device, wherein only one key part is sent to each user device; and wherein the broadcasting server is configured to encrypt data for broadcast with the encryption key and to broadcast the encrypted data to said plurality of user devices.

According to a second aspect of the invention there is provided a user device for receiving encrypted data broadcast by a broadcasting server, that is connectable to a key distribution centre and to a network including a group of one or more other user devices, the user device comprising a processor and a memory, the memory including a first key part, the first key part being one of a plurality of key parts which together form a decryption key, wherein the user device is configured to: obtain a second key part, of said plurality of key parts, from a second user device in said network and to generate a decryption key by compiling said plurality of key parts including use of the first key from the memory and the second key part from said second user device, and to decrypt encrypted data received from said broadcasting server using the generated decryption key.

According to a third aspect of the invention there is provided broadcasting apparatus comprising a broadcasting server, a key distribution centre and a network of a group of user devices, wherein the broadcasting server is in accordance with the first aspect of the invention and is configured to broadcast the key parts to the network of user devices, and the user devices in the network each comprising a processor and a memory, the network of user devices including a first user device including a first key part, and a second user device, the first user device is configured to obtain a second key part from the second user device via the network and to generate a decryption key by compiling multiple key parts including using the first key from the key distribution centre and the second key part from the second user device, and to decrypt encrypted data received from said broadcasting server using its generated decryption key, the second user device is configured to obtain the first key part from the first user device via the network and to generate a decryption key by compiling multiple key parts including using the second key from the key distribution centre and the first key part from the first user device, and to decrypt encrypted data received from said broadcasting server using its generated decryption key.

Further preferred and optional aspects of the invention are set out in the claims

Embodiments of the invention will now be described, by way of example only, with reference to the following figures in which:

Figure 1 is a schematic diagram of a scalable video system in accordance with an aspect of the invention;

Figure 2 is a schematic diagram of the subscribers of Figure 1 split into two groups,

Figure 3 is a flow chart of a process of distributing keys and encrypting and decrypting scalable video;

Figure 4 is a flow chart of the process of joining a new subscriber;

Figure 5 is a flow chart of the process of regenerating a key; and

Figure 6 is a flow chart of the process of adjustment when a subscriber leaves.

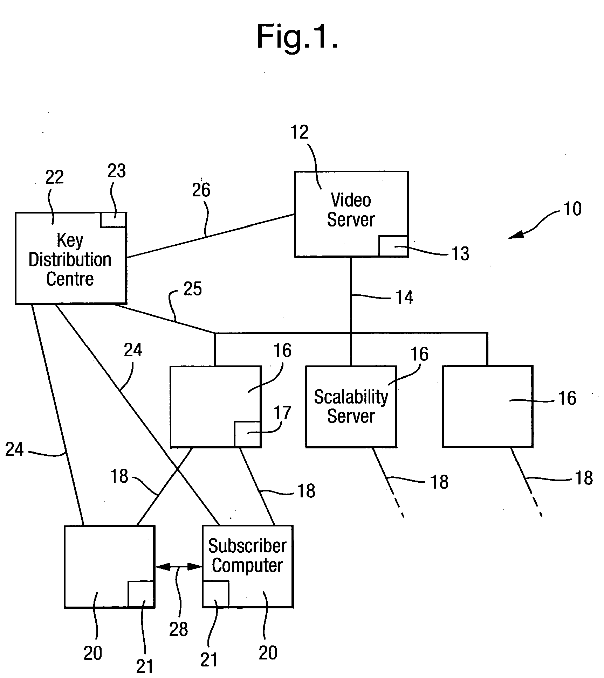

Referring to Figure 1 there is shown a scalable video system 10 comprising a video server 12, scalability servers 16, subscriber computers 20 and a Key Distribution Centre (KDC) 22.

The video server 12 comprises a conventional server typically including, a processor/CPU, and memories including a Random Access Memory and a hard disk 13. The server 12 broadcasts scalable video packets which are encrypted.. This encryption uses a group key and key parts that are generated and stored by the video server 12 in the hard disk 13 along with a set of one way hash functions.

The video server 12 has a first communication path 14 to the scalability servers 16 and a second communication path 26 to the Key Distribution Centre 22. The first communication path 14 allows the video server 12 to broadcast the scalable video and might typically comprise the Internet, a private network or communication satellites. The second communication path 26 is used to help verify the authentication of scalable video packets. The path 26 includes a secure channel such as by using Ipsec (IP security) or TLS (Transport Layer Security). All communication between KDC 22 and video server 12 are confidential and authenticated.

There may be any number of Scalability Servers 16, though in Figure 1 three are illustrated. Each scalability server 16 may comprise conventional computer hardware including a processor/CPU, and memories including a Random Access Memory and a hard disk 17. The scalability servers 16 are each connected via a third communication path 18 to at least one subscriber computer 20. Typically the third communication path includes the Internet and wireless networks, communication satellites or a mobile telephony network.

In a known manner, each scalability server 16 is programmed to receive scalable video packets from the Video Server 12, scale the packet up or down in size to meet the requirements of subscribers and to transmit this on to the subscriber computers 20 over third communication path 18.

The process described below allows the video to be encrypted and decrypted without any involvement from scalability servers 16 to perform authentication, and therefore without any computational cost to the servers 16.

Subscriber computers 20 may comprise conventional computers or set top box hardware including a processor/CPU, and memories including Random Access Memory and a hard disk 21.

Typically there are a large number of subscriber computers 20 for each scalability server 16, but in Figure 1 only two are illustrated. A scalability server 16 may be provided for each possible size of scaled up or down video packet, with the subscriber computers 20 connected to the same scalability server 16 being computers designated to receive the video at the given size provided by that server 16 and preferably the size is optimal for to the computer 20 capabilities. Alternatively which of the scalability servers 16 a subscriber computer 20 is designated and connected to may be based on the capabilities of data path 18 which could vary between subscriber computers 20. For example the subscriber computers 20 could be smartphones with some connected to via a 2.5G (GRPS) telephony network and others connected to via a 3G or HSDPA network.

The subscriber computers 20 are responsible for decrypting the scaled video packet to allow it to be watched by end users via a software based media player. Preferably computers 20 are only in communication with scalability servers 16 via path 18 and have no direct link to the video server 12. As will be described below each subscriber computer 20 stores a key part and a one way hash function in the hard disk 21.

The subscribers 20 are connected together by a network 28. Network 28 can for example be a fixed network or wireless ad-hoc network.

The Key Distribution Centre 22 may comprise conventional computer hardware including a memory 23 and a processor. As well as a connection 26 to video source 12, KDC 22 is connected to subscriber computers 20 via fourth communication path(s) 24, such as the Internet, and/or connected to scalability servers 16 via a fifth communication path 25, such as the Internet. In Figure 1 two separate paths 24 are shown, however, since the subscribers 20 are connected by network 28 there need only be a single path 24 connecting to the network 28. There may be more than one network 28 for different sets of subscribers 20 and the KDC 22 may connect to each of these. Additionally and/or alternatively there can be multiple KDCs 22.

The KDC 22 stores the group key, one way hash functions and key parts from video server 12.

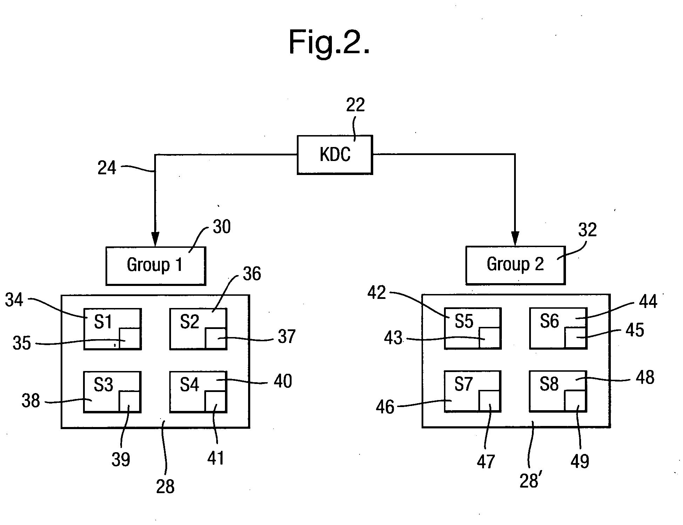

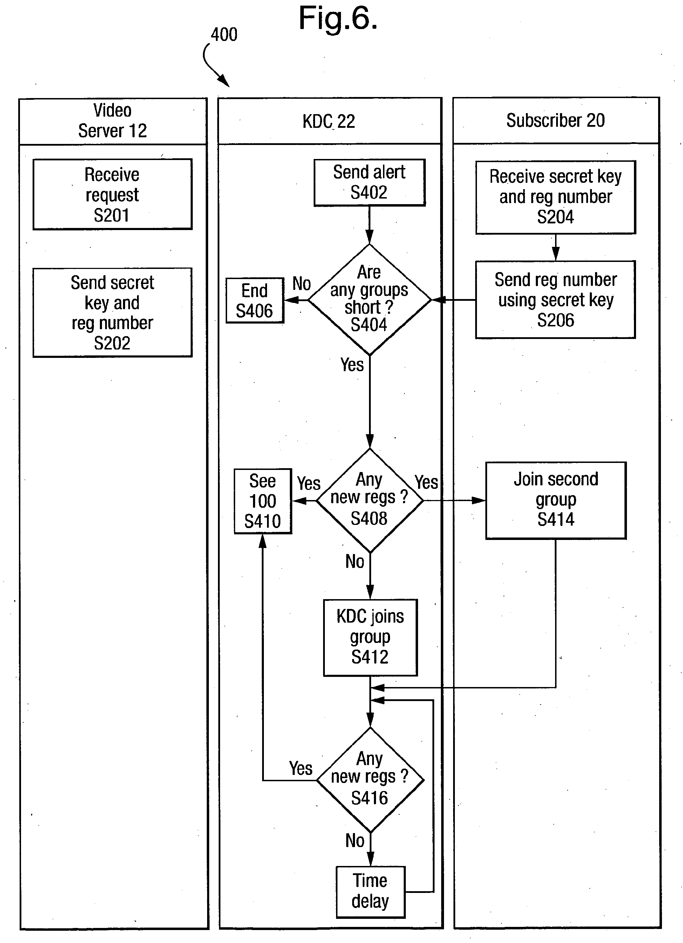

The subscriber computers 20 are allocated into groups as depicted in Figure 2. There may be any number of groups but in Figure 2 there is shown two groups, 30 and 32 both connected to the KDC 22 by communication path 24. The first group 30 includes four subscription computers 20 which are: first subscriber 34, second subscriber 36, third subscriber 38 and fourth subscriber 40. Each of these four subscribers 34, 36, 38, 40 are connected together by network 28. Second group 32 is also shown to comprise four subscribers 20 which are: fifth subscriber 42, sixth subscriber 44, seventh subscriber 46 and eighth subscriber 48. Each of the subscriber computers 20 within second group 32 are also connected by a network. The network of the second group 32 may be the same network 28 or a different network 28'. For some embodiments it is necessary for the subscribers of different groups 30 and 32 to be in contact with each other though this can be helpful when subscribers leave as described with reference to Figure 6 below.

In most practical embodiments the number of subscribers in each group would be far greater than four but this low number is shown for illustrative purposes in order to make the examples simpler to understand.

For reasons which will be explained below, each of the subscribers 20 in a particular group 30 or 32 has a different key part and one way hash function stored in their memory 21 to any of the other subscribers in the group. However, key parts and one way hash functions may be repeated in different groups. In this case a group key GK and four part keys K1, K2, K3 and K4 are stored at KDC memory 23. In the memory 35 of first subscriber 34 is stored the first key part K1 and a corresponding one way hash function H1, in second subscriber memory 37 is stored second key part K2 and corresponding hash function H2, in third subscriber, memory 39 is stored third key part K3 and corresponding hash function H3 and in fourth subscriber memory 41 is stored fourth key part K4 and corresponding hash function H4. In fifth subscriber memory 43 is stored first key part K1 and corresponding hash function H1 and fifth subscriber 43 has the same contents in its memory as first subscriber 34. Similarly sixth subscriber 44, seventh subscriber 46 and eighth subscriber 48 have K2 H2, K3 H3, and K4 H4 in each of their memories respectively and therefore are equivalent to second subscriber 36, third subscriber 38 and fourth subscriber 40 respectively.

Each of the key parts K1 to K4 are 'parts' of the group key GK divided from it using Shamir's secret sharing. As is conventional with Shamir's secret sharing, once a party knows all four parts, K1, K2, K3 and K4 they can calculate GK, the group key. However it is not possible to calculate the group key with anything less than the four parts and having three of the key parts e.g., K1, K2 and K3 is no more helpful than having a single part K1. In alternative embodiments alternative known methods of secret sharing may be used provided that it is very difficult to know the group key without each of the key parts. Alternatively rather than require that all of the key parts must be known in order to generate the group key, secret sharing techniques that require only a set number of the key parts to be needed can be used. For example it could be that there are five, six or seven key parts but that only four needed and only four normally shared amongst each group 30 and 32.

Each one way hash function H1 to H4 is different. By one way hash function it is meant a function which given the same or equivalent input should always generate the same output but for which it is very difficult or impossible to calculate the input from the output even if the one way hash function is known.

The groups 30 and 32 may correspond to particular scalability servers 16. Alternatively there may be multiple groups such as group 30 and 32 for each scalability server 16 or groups may be formed across scalability server 16 so that for instance the first subscriber 34, and second subscriber 36 and connected to a first scalability server whilst a third subscriber 38 and fourth subscriber 40 are connected to a second scalability server 16. The preferred system is one group per scalability server 16.

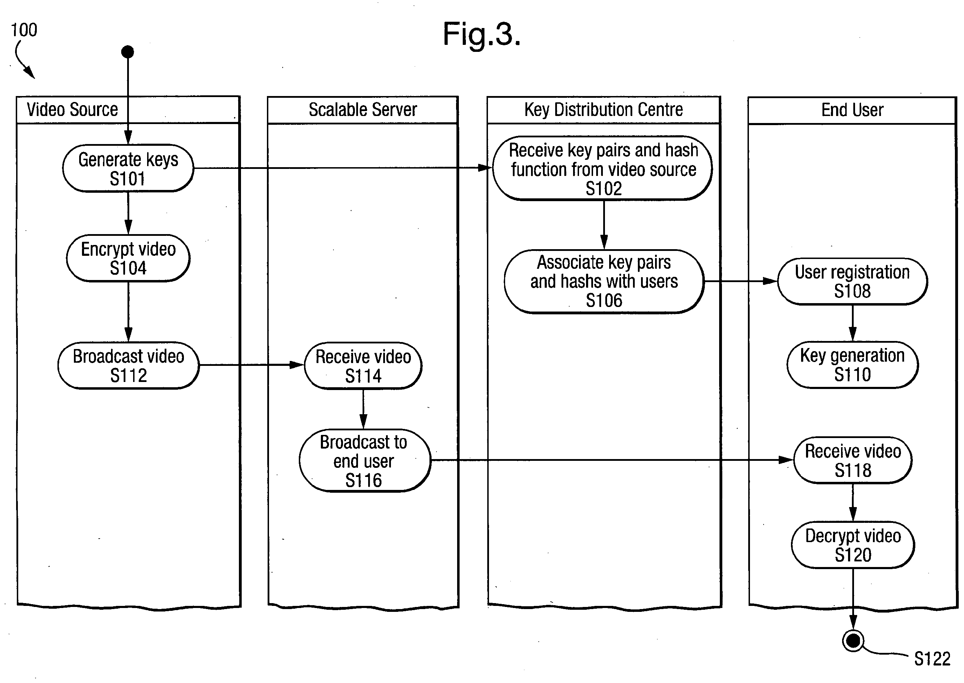

In figure 3 is shown a process 100 of generating keys and distributing them through to subscribers 20 allowing for encryption and decryption of video.

First at step S101 the video server 12 generates a group key GK and using secret sharing techniques such as Shamir's secret sharing generates key parts that make up the group key GK. For the purposes below process S100 is described as applied to groups 30 and 32 of Figure 2 using with the already mentioned keyparts key K1, K2, K3 and K4. In most practical embodiments however there will be far more than four key parts. In addition to generating the key parts and group key GK, the video server 12 also provides four different one way hash functions H1, H2, H3 and H4 for each of the key parts K1, K2, K3 and K4.

Optionally at this stage the video server 12 may apply the one way hash functions H1 to H4 to each of the key parts K1 to K4 to generate four new key parts K1' to K4'and combine these together to achieve a second group key GK'. Further it may apply the hash functions to their corresponding key parts a second time, combining the resulting key parts K1" to K4" to form a third group key GK". This can be done any number of times with each new generated group key being stored in hard disk 13. This additional step is not necessary since the video server 12 has the full set of hash functions H1 to H4 and the original key parts K1 to K4 in its hard disk 13 and therefore can generate these further group keys at any time. Accordingly depending on the needs of the particular system the system designer can decide whether it is desired to prioritise computation or storage cost. By generating all of the group keys GK' etc. in advance it will be easier for the video server 12 as it will not have to compute any of these keys on the fly. However, it will have to store them in a memory increasing its memory requirements. An in between approach can also be taken in which some keys are calculated in advance and some are calculated on demand.

Next the complete set of key parts K1 to K4 and hash functions HI to H4 are sent from the video server over the secure channel in communication path 26 to KDC 22. At step S102 KDC 22 receives the complete set of key parts K1 to K4 and hash functions HI to H4.

At step S106 key distribution centre 22 determines how many subscriber computers 20 there are and places them into groups . In this example the eight subscribers 20 are placed into two groups, the first group 30 and second group 32. The KDC 22 then associates key parts and hash functions with particular subscribers 20. In this example the KDC 22 decides to associate first key part K1 and equivalent hash function H1 with first subscriber 34 and fifth subscriber 42, second set K2 and H2 with second subscriber 36 and sixth subscriber 44, third set K3 and H3 with third subscriber 38 and seventh subscriber 46 and fourth set K4 and H4 with fourth subscriber 40 and eighth subscriber 48.

Next at step S108 the determined sets of key parts and hash functions are sent to their associated subscriber 20 and stored in their subscriber memory 21. This communication this may form a complete part of the registration of subscriber 20 at step S108. The KDC 22 records the fact that each of these subscribers 34 to 48 is registered and gives each a registration number.

The next step taken by the subscribers 20 is to generate the group key at step S110. This is done by communication through network 28 for each group 30 or 32. Accordingly for group 30 the four subscribers 34, 36, 38 and 40 all send to each other their stored key part. Accordingly the first subscriber will be sent the key parts K2, K3 and K4 etc., so that each of the four subscribers have all key parts K1, K2, K3 and K4. Importantly, however, none of the hash functions, H1, H2, H3 or H4 are sent and these stay secret to the particular subscriber. Accordingly the first subscriber 34 for example now knows all of key parts K1, K2, K3 and K4, but the only hash function it has stored or could be aware of is H1. Once these four key parts are known they are added together to form group key GK and this group key GK is then stored in the hard disk 21 of each subscriber's computer 20.

The group key GK is also formed by the subscriber computers 20 of subscribers 42, 44, 46 and 48 of second group 32 in the same manner with each of them sending each other their key part but not sending their hash functions.

During step S110 the subscribers in each group 30 or 32 are left with the addresses in the network 28 of the other subscribers in their group e.g., first subscriber 34 has the addresses of second subscriber 36, third subscriber 38 and fourth subscriber 40.the addresses are also stored in the KDC memory 23.

At step S104 the video server encrypts the video packets it wishes to broadcast. Preferably as described above the only scalable video packet component which is encrypted is the base component. The encryption is performed using group key GK, which is known to the video server 12 and contained in its memory such as hard disk 13.

The next step taken by the video server 12 is step S112. This may take place before, after or simultaneously with step S110 so long as they are sufficiently close in time that step S120, which will be described below, is performed after step S110.

At step S112 the video packets, which are encrypted at step S104 are broadcast over path 14.

At step S114 the scalability servers 16 receive the encrypted video packets. These can be received one at a time or multiple video packets at once. Next at step S116 the encrypted video packets are broadcast to the subscriber computers 20 connected to each scalability server 16 over communication path 18. Again this can be done one at a time or several video packets can be broadcast simultaneously.

Before the video is sent out it is scaled up or down to meet the requirements of the subscribers 20 for each particular scalability server 16. Generally it is scaled down by only using the parts of the trail layers that are suitable for the requirements of either the particular subscribers 20 or the connecting communication paths 18.

At step S118 each subscriber computer 20 receives video in its appropriately scaled format. Because the base part of this was encrypted the video cannot be played on a video player without it first being decrypted. The video was encrypted with group key GK using a symmetric encryption system and therefore can also be decrypted with group key GK. Each of the subscribers 34 to 48 have already generated the group key GK at step S110 and therefore are able to decrypt the video using this group key GK at step S120. Finally therefore the video is played on a video player on the subscriber computer at step S122 such as by using Windows Media Player (RTM). The system can also be implemented by using set top box hardware such as for use in broadcast system over satellite where decryption and playing the video happen by conventional means.

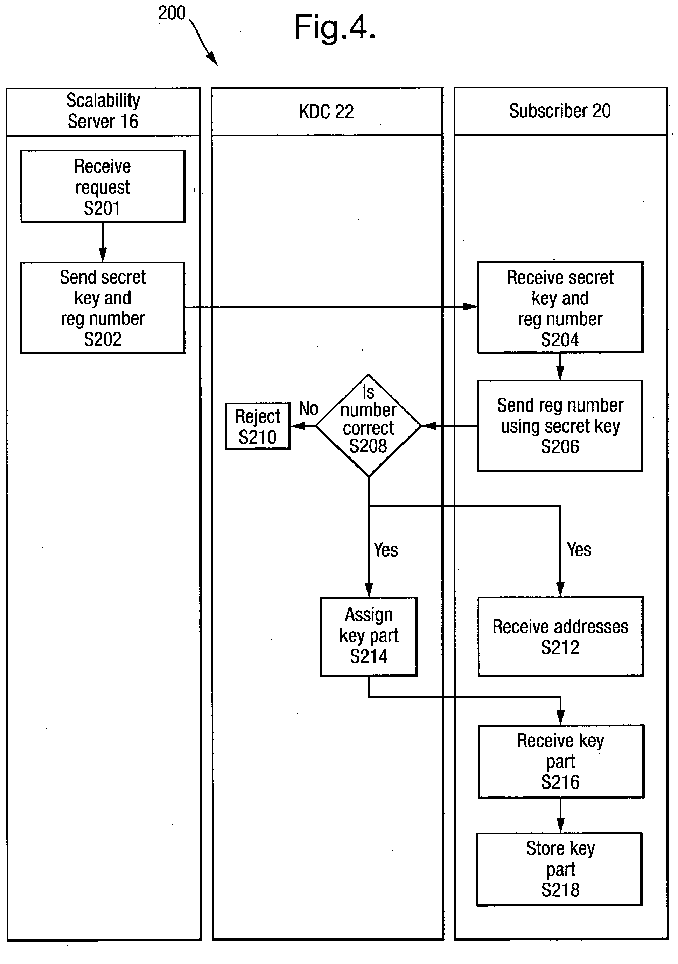

In Figure 4 it is shown the process 200 of a computer joining the network 28 and becoming a subscriber computer 20.

First at step S201 a new subscriber contacts the appropriate scalability server 16 to request registration. Next at step S202 the scalability server 16 sends a password or secret key corresponding to the KDC 22 and a registration number which are both confidential and known to the subscriber only.

Next at step S204 the subscriber receives the secret key and registration number.

At step S206 the new subscriber 20 uses the password or secret key of the KDC 22 to contact it via communication path 24 and sends to it its registration number from step S204.

At step S208 the KDC 22 checks with the relevant scalability server 16 if the registration number is correct or not. If it is not correct then the subscriber 20 is rejected at step S210. If it is correct then the KDC 22 assigns the subscriber 20 to a particular group and sends to the subscriber the network addresses of all the other subscribers 20 in its group which is received at step S212

Next at step S214 KDC 22 will assign to the new subscriber a key part and corresponding hash function from its memory 23 that was given to it by the video server 12. When these are received by the subscriber in step S216, the subscriber stores these in its memory 21 at step S218.

In the case where the group e.g., group 1 (30) was missing a subscriber 20 with a necessary key part to form the group key GK then the missing key part is the one assigned to the new subscriber. Where there are numerous groups it is often possible to find a group with a missing part. Alternatively the new subscriber could also be given first part K1 and hash function H1 duplicating the information in memory 35 of the first subscriber. Alternatively using the known secret sharing techniques it may be that more key parts are generated than are needed to determine GK. So, for example, ten key parts K1 to K10 may be generated, any four of which can be used to generate GK and in this case K5 could be given equivalent H5 to the new ninth subscriber.

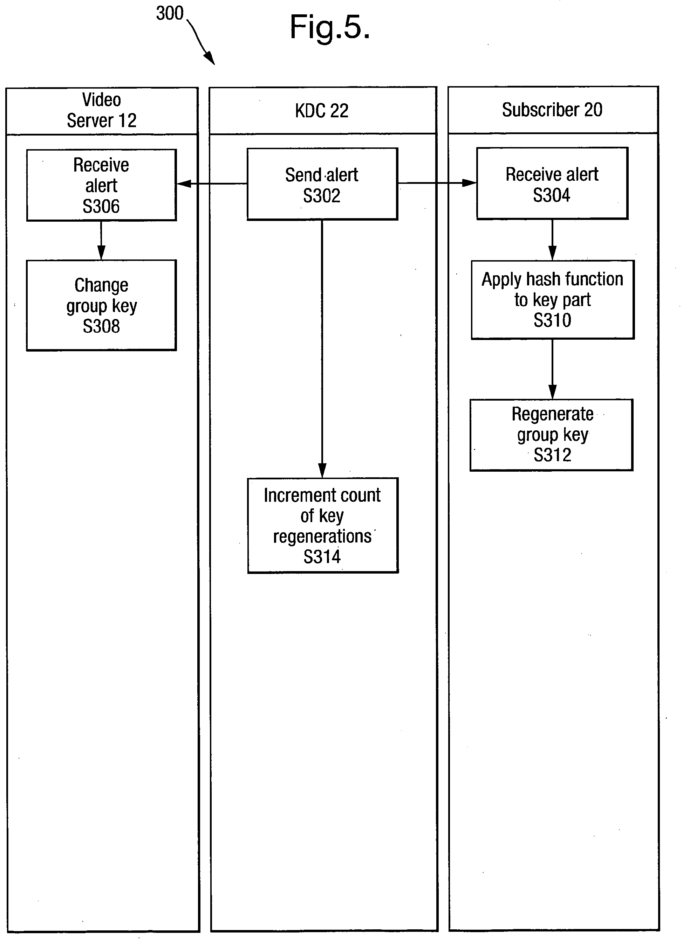

In Figure 5 is shown a process 300 of changing the group key GK. The group key will be changed when a subscriber leaves according to the process described below with reference to figure 6. Additionally it may simply be wished to change the group key GK after a pre-determined length of time to reduce the chance that a third party illegitimately has access to it.

Once it is decided to change the group key GK then first at step S302, the KDC 22 sends out a signal that the group key GK is to be changed. This signal is received by each subscriber 20 over path 24 at step S304 and by the video server 12 over path 26 at step S306.

The next step taken by the video server 12 is step S308. At S308 the video server 12 changes the key, with which it applies encrypts at step S104 of process 100, from key GK to new group key GK'. Depending upon which method described above is used GK' may already be stored in the hard disk 13 of video server 12. Alternatively GK' is generated on demand in the same manner that the GK' was generated in advance as described above.

The next step taken by subscribers 20 is step S310 where the subscriber 20 applies its stored hash function in its memory 21 to its present key part. This is done separately by each subscriber at least within the same group and preferably within all groups. For example first subscriber 34 applies hash function H1 to key part K1 generating new key part K1'. Each subscriber does the equivalent act so that the second subscriber generates K2', the third subscriber 38 generates K3', and fourth subscriber 40 generates K4'. Second group 32 generates the same new key parts K1' to K4' in the same manner.

Next at step S312, step S110 of process 100 is repeated using the new part keys K1' to K4' which results in new group key GK'. Step S312 will take into consideration any changes to the groups 30 or 32 since if any new subscribers have joined or left using the processes of 200 or 400 the subscribers in that group will already be informed of the changes in addresses of subscribers by KDC 22.

At step S314 the KDC 22 updates how many times the hash functions have been used i.e., how many times the group key has been changed. In this first application described the number will be one and this is stored in the KDC memory 23. This number will increase each time that process 300 is used. Recording this number is useful for when a new subscriber and process 200 is used. This means that rather than the KDC 22 calculating any of the new key parts incurring computational cost it can simply send the original key part to a new subscriber in process 200 along with its corresponding hash function and inform it how many times the hash function should be applied in order to produce the current part key required from which the current group key being used by the video server 12 can be generated.

After process 300 has finished the usual process 100 can continue.

Referring to Figure 6 thus showing the process 400 of adjustments system 10 makes when a subscriber 20 leaves and therefore is no longer a subscribing computer 20.

First at step S402 KDC 22 performs the step S302 of sending a signal that the group key is to be changed and therefore initiates process 300 resulting in a changed group key and updated key parts with the subscribers 20.

Changing the group key when a subscriber 20 leaves is very beneficial. This is because the subscriber 20, in order to have decrypted video, will have had access to all of the required key parts needed to calculate the current group key and therefore could attempt to use this to decrypt the video even though they are no longer an official subscriber and may not be paying for the service. Once process 300 is completed the subscriber that is now the ex-subscriber will not be able to decrypt the video which will now use new group key GK'.

Taking the example of the first subscriber 34 leaving group 1 (30). The first subscriber 34 will have access to K1, K2, K3, K4 and H1 from memory 35. Accordingly it can apply H1 to first key part K1 to result in current key part K1', however, because the group key is compiled using a secret sharing system one current key part on its own is of no value. First subscriber 34 is not able to update K2, K3 and K4 to arrive at current K2', K3' and K4' since it was never given access to the required hash functions H2, H3 and H4. Accordingly it does not have all the required key parts and cannot compile new group key GK' and cannot decrypt the video. Even if the subscriber 34 stayed as a subscriber through several key changes before leaving the subscription would not help to decrypt the video once the group key has been changed in process 300. This is because of the one way nature of the hash functions. Whilst first computer 34 would have access to historical records of various key parts such as all of K1 to K4, K1' to K4', K1" to K4" and hash function H1 the nature of for the changes form for example K2 to K2' to K2" is of little value in attempting to calculate what the corresponding hash function H4 is because it is a one way hash function.

At step S404 the KDC 22 determines whether any of the groups, for instance 30 or 32 have insufficient numbers of subscribers in order to generate the new group key GK. If there are no groups which are insufficient in number then at step S406 process 400 ends. This can be the case, for instance where there are more than the required number in each group as described as a possibility in process 200. In preferred embodiments the maintained number in the group is exactly equal to the number of key parts required to calculate the group key and therefore the answer will nearly always be 'yes' whereby the process continues to step S408.

At step S408 KDC 22 determines whether any new subscribers have asked to join. If no video has been sent out at this stage it is possible for a time delay to be put in so that step S408 will not be decided for some time increasing the likelihood that a new subscriber will have joined. If a new member has joined then at step S410 process 100 is used with the new subscriber taking the place of the old subscriber and given their old key part and hash function by KDC 22. In the example of first subscriber 34 leaving the new subscriber would simply take the place and effectively become the first subscriber 34. This provides a simple solution therefore it may be desirable to wait for a new subscriber to join, however, if video is currently being sent, this is likely not to be desirable since until the group 30 has the necessary number of subscribers 20 it can not generate the new group key and therefore can not decrypt the video (or if the video server 12 keeps using the old key the leaving subscriber may be able to still decrypt the video0.

If there are no new members then the process either continues to step S412 or step S414. At step S412 the KDC 22 simply assigns itself a network address and acts as if it is a subscriber in a group for the purposes of the other subscribers in the group. So for example, in first group 30 when first subscriber 34 has left KDC 22 will update the first part of the key chain in its memory 22 using the hash function H1 also in its memory 22 until it is up to date and the other subscribers, 36, 38 and 40 will combine together with the KDC 22 to have all of the key parts to generate the group key GK. This is a less preferred solution since the KDC 22 will have to be involved in key generation and as the number of subscribers grow it may become difficult for KDC 22 to compute keys for many missing subscribers due to the computational cost.

Alternatively at step S414 the KDC 22 assigns a subscriber from another group to also be in the group of the missing subscriber. As an example with first group 30 and second group 32 where first subscriber 34 has left, the KDC 22 will know that the fifth subscriber 42 has the same key part K1 and hash function H1 as the ex-subscriber 34. Accordingly the fifth subscriber 42 is included both in group 2 32 where it is still needed and in first group 30 taking the place of the first subscriber 34. This allows both groups 30 and 32 to generate the new group GK'. This is generally the preferred option rather than step S312 but still less preferred than having a new member since it does require one subscriber to be in two groups simultaneously.

Whether step S412 or S414 is taken, the next step is step S416. At step S416 the same question is asked as at step S408 and if the answer is 'no' then after a time delay S416 is repeated. If the answer is 'yes' whatever action was taken in step S412 or S414 is undone i.e. KDC 22 no longer acts as part of the group or a subscriber 20 no longer shares groups (e.g., fifth subscriber 42 from second group 32 no longer forms part of first group first group 30) and instead the process proceeds to S410. When a new subscriber providing the required number in the group.

It may be possible for a party to repeatedly subscribe, unsubscribe and re-subscribe in an attempt to gain access to all relevant key parts and hash functions. For example, after the first subscriber 34 leaves with knowledge of K1 to K4 and H1 it can rejoin and hope that it is given a different hash function H2, H3 or H4. If it was to leave and rejoin enough times eventually it would have the complete set of hash functions which when used with its complete set of original key parts K1 to K4 may enable it to generate the current group key even after it is changed, without being a subscriber. Accordingly it may be able to decrypt the video illegitimately. In practice however, the number of subscribers in a group is likely to be around fifty with their being fifty separate key parts. Accordingly a subscriber would have to unsubscribe and subscribe a minimum of fifty times in order to have all of the hash functions. Since the computer 20 cannot control which hash function it will be given the statistical likelihood is that the number of unsubscriptions and subscriptions that would need to be performed to have all of the hash functions would be enormous. Because Shamir secret sharing is used, where there are n parts of the key and a party knows n-1 parts of the key this makes them no nearer to generate the key until they knows the final remaining part. Accordingly it will be realistically impractical for any party to break the encryption using this method provided the number of key parts is sufficiently large. Additionally in most implementations of the invention it will not be used for confidential information but simply video for which it is desired that people pay to watch or download. Since the cost of paying to subscribe and unsubscribe hundreds of times is likely to far outweigh the cost of simply legitimately paying for the subscription there will no incentive for any party to attempt to attempt to acquire all the hash functions.

The protocol used for the system is very dynamic for the purposes of security and the security level can be enhanced by simply increasing the size of the groups, i.e., the number of subscriber computers 20 assigned to each group. This will of course increase the key parts and correspondingly increase the number of key parts needed for the group key. In an embodiment in which maximum security is required all of the subscriber computers 20 can be formed into one single group and therefore with a very large number of key parts. In embodiments where security is less important for which subscribers will leave and join very frequently and there is a very large numbers of subscribers, it may be preferable to have relatively small groups in order that when subscribers leave there is always the possibility of having a subscriber share groups at step S414 rather than use step S412.

Additionally a mechanism for monitoring subscribers' habits can be provided. For example the system 10 may record the IP address of all subscribers so that if they are to re-subscribe the system 10 can choose to blocking them from doing so or ensure that they are given the same hash function as during their previous subscription and put into an appropriate group

Beneficially there is little communication between the video server 12 and KDC 22. The only communication that would normally be performed is the initial sending of the keys etc. at step S102 and sending a signal at step S306. Accordingly the secure channel 26, which may have computational costs associated with it, does not have to be used frequently. Overall the embodiments described above require very little communication and/or computation for its system of key management. It satisfies all normal conditions of security as it has key secrecy, backward secrecy (by virtue of the hash functions) and forward secrecy (by virtue of the secrecy of the hash functions). Beneficially the video server is able to encrypt the video and subscriber computers 20 decrypt the video without any direct contact between video server 12 and the subscriber 20.

Below is given a mathematical example of a simple illustration of generating key parts and a key chain according to secret sharing system which will be suitable for the invention. As described there are only three key parts, though for the reasons given above the number of key parts would normally be much larger.

The generalized equation for the secret sharing is as follows:

$$EQ1 \quad D(x)=a_0 + a_1 x + a_2 x^2 + \ldots\ldots\ldots\ldots a_{k-1} x^{k-1} + a_k x^k$$

in which $a_0$ is the group key.

The video server 12 will make an equation by which it will calculate the shares, for example the equation can be:

$$EQ2 \quad D(a)=a_0+a_1 x+ a_2 x^2$$

That is, the key will be divided into three parts and all those three parts will be required to regenerate the key. The equation will be set by the video server 12 initially. After the initial generation at step S101 the equation will be calculated on the basis of the shares values that come out after applying the hash functions to the key parts.

Using equation EQ2 provides EQ3: $D(x)= 1+ 2x + 3x^2$

That is, the group key $a_0 = 1$

The above equation is of the second order and it will be made by the video server 12, it can though be any other equation. We are taking 3 here as an example only.

The Video Server 12 calculates that the three shares which will be:

$$D(0)=1 \quad D(1)=1+2(1)+3(1)=6$$

$$D(2)=1+2(2)+3(2)^2=17$$

$$D(3)=1+2(3)+3(3)^2=34$$

Now the secret key parts will be (1, 6) plus Hash function H1;

(2, 17) plus Hash function H2;

(3, 34) plus Hash function H3.

Where $D(0)=1$ is the group key and if we put all the three key parts together, only then we will be able to get the group key. That is, our secret sharing scheme has (K,N) = (3,3).

During step S110 the following equations will be used by the third subscriber to generate the group key :

$$a_0+a_1+ a_2 =6$$

$$a_0+2a_1+ 4a_2 = 17$$

$$a_0+3a_1+ 9a_2$$

In order to generate the group key the third subscriber will use the above equations simultaneously

$$EQ6 \quad a_0 = 6 - a_1 - a_2$$

substituting value 6 in the other two equations gives $a_2 = 3$ and $a_1 = 2$ and putting the above values back in EQ6 gives the group key which is $a_0 = 6 - 2 - 3= 1$ So 1 is the group key. The third subscriber will then send the group key to all others in the network.

Now let say that the third subscriber leaves the network and a new subscriber comes in the network taking its place. As described above in processes 300 and 400 each subscriber using its own share of the key and hash function will generate a new key part. All the new key parts will then be sent to a subscriber, so that it would be able to compute the new group key. Now we assume as an example that the subscribers obtained the following values as key parts:

First Subscriber H1(6)=10

second subscriber H2(17)=18,
third subscriber H3(34)=28.

Now using the above key parts a subscriber S1 will calculate the new group key as follows:

$$EQ7 \ a_0+a_1+a_2 = 10$$

$$EQ\ 8 \ a_0+2a_1+4a_2 = 18$$

$$EQ9 \ a_0+3a_1+9a_2 = 28$$

From EQ7 we get EQ10 $a_0 = 10 - a_1 - a_2$

Substituting EQ10 in EQ8 and EQ9 we get $a_1 = 5$ $a_2 = 1$ Putting $a_1$ and $a_2$ in EQ10 we get the group key which is $a_0 = 10 - 5 - 1 = 4$ Therefore, 4 is the group key that will be used by the video server to encrypt and the subscribers will use to decrypt. The thing to notice here is that without any communication between the video server and the subscribers, the key has been changed successfully.

## Claims

1. A broadcasting server (12) connectable to a plurality of user devices (20) and connectable to or comprising a key distribution centre (22), the broadcasting server (12) comprising a processor and a memory (13),
   the broadcasting server (12) being configured to generate an encryption key and a plurality of key parts which together form the encryption key and/or the memory (13) of the broadcasting server (12) includes an encryption key and a plurality of key parts which together form the encryption key, wherein multiple key parts are needed to generate a decryption key identical to the encryption key to decrypt data encrypted using the encryption key,
   the broadcasting server (12) or key distribution centre (22) being configured to: send each one of the multiple key parts to at least one corresponding user device (20), wherein only one key part is sent to each user device, and wherein the broadcasting server (12) is configured to encrypt data for broadcast with the encryption key and to broadcast the encrypted data to said plurality of user devices (20).

2. A user device (20) for receiving encrypted data broadcast by a broadcasting server (12), that is connectable to a key distribution centre (22) and to a network including a group (30, 32) of one or more other user devices (20),
   the user device (20) comprising a processor and a memory (21), the memory (21) including a first key part, the first key part being one of a plurality of key parts which together form a decryption key,
   wherein the user device (20) is configured to:

   obtain a second key part, of said plurality of key parts, from a second user device (20) in said network and to generate a decryption key by compiling said plurality of key parts including using of the first key from the memory (21) and the second key part from said second user device (20),
   and to decrypt encrypted data received from said broadcasting server (12) using the generated decryption key.

3. Broadcasting apparatus comprising a broadcasting server (12), a key distribution centre (22) and a network of a group of user devices (20), wherein the broadcasting server (12) is in accordance with claim 1, and is configured to broadcast the key parts to the network of user devices (20), and
   the user devices (20) in the network each comprise a processor and a memory (21), the network of user devices (20) including a first user device (20) including a first key part, preferably in accordance with claim 2, and a second user device (20), the memory (21) of the second user device (20) preferably including a second key part, the first user device (20) is configured to obtain a second key part, of said plurality of key parts, from the second user device (20) and to generate a decryption key by compiling multiple key parts including using the first key from memory (21) or from the key distribution centre (22) and the second key part from the second user device (20), and to decrypt encrypted data received from said broadcasting server (12) using its generated decryption key,
   the second user device (20) is configured to obtain the first key part from the first user device (20) and to generate a decryption key by compiling multiple key parts including using the second key from memory (21) or from the key distribution centre (22) and the first key part from the first user device (22), and to decrypt encrypted data received from said broadcasting server (12) using its generated decryption key.

4. Broadcasting apparatus according to claim 3, wherein the decryption keys generated by the first and second user device (20) are identical or functionally identical.

5. Broadcasting apparatus, broadcasting server (12) or user device (20) according to any one of the preceding claims, wherein the key distribution centre (22) is an integral part of the broadcasting server (12) or wherein some parts and/or functions of the key distribution centre (22) are integral to the broadcasting server (12) and some are not.

6. Broadcasting apparatus, broadcasting server (12) or user device (20) according to any one of claims 1 to 4, wherein the broadcasting server (12) and key distribution centre (22) are separate devices in communication with each other.

7. Broadcasting apparatus, broadcasting server (12) or user device (20) according to any one of the preceding claims, wherein the plurality of key parts are generated according to a secret sharing protocol so that knowledge of only some of the key parts which together make up the key does not make it significantly easier to calculate the key or wherein knowledge of more than on key part but less than the number required to compile the key give no more information than a single one of the key parts.

8. Broadcasting apparatus, broadcasting server (12) or user device (20) according to claim 7, wherein the plurality of keys are divided from the key using a Shamir's secret sharing algorithm.

9. Broadcasting apparatus, or broadcasting server (12) according to claim 1 or any of claims 3 to 8, wherein the key distribution centre (22) is configured to alert the broadcasting server (12) to change encryption or decryption key at a predetermined time, at a random time or based on a detected event,
wherein the broadcasting server (12) is configured to generate at least two one-way functions and/or the memory (13) of the broadcasting server (12) includes at least two one-way functions, and is configured to respond to receiving a key change alert from the key distribution centre (22) by applying a first one-way function to the first key part to generate a first modified key part and a second one-way function to the second key part to generate a second modified key part, and to compile a new encryption key from a plurality of key parts including the first modified key part and the second modified key part and to encrypt items to be broadcast with the new encryption key.

10. Broadcasting apparatus according to claim 9, wherein the key distribution centre (22) is configured to alert at least two of the user devices (20) to change encryption or decryption key at a predetermined time, at a random time or based on a detected event,
the memory (21) of the first user device (20) including the first one-way function and/or
the broadcasting server (12) is configured to send the first one-way function of the at least two one-way functions to the first user device (20), the memory (21) of the second user device (20) including the second one-way function or the broadcasting server (12) being configured to send the second one-way function of the at least two second way functions to the first user device (20),
wherein the first user device (20) is configured to calculate the first modified key part by applying the first one-way function to the first key part and to obtain the second modified key part from the second user device (20), to generate a new decryption key by compiling key parts including the first modified key from its calculation and the second modified key part from the second user device (20), and to decrypt data from the broadcasting server (12)using the decryption key,
the second user device (20) is configured to calculate the second modified key part by applying the second one-way function to the second key part and to obtain the first modified key part from the first user device (20), to generate a new decryption key by compiling key parts including the second modified key from its calculation and the first modified key part from the first user device (20), and to decrypt data from the broadcasting server (12) using the decryption key.

11. Broadcasting apparatus according to claim 9 or claim 10, comprising a plurality of groups (30, 32) of user devices (20), the first and second user devices (20) configured to compile the plurality of key parts from other devices (20) in their group (30, 32), each group (30, 32) containing at least one user device (20) which is configured to compile a decryption key from a plurality of key parts from other devices (20) in their group (30, 32).

12. Broadcasting apparatus according to claim 11, wherein the broadcasting server (12) is configured to provide a different one of the plurality of key parts generated or stored by the broadcasting server (12) to each of the plurality of user devices (20) in one or more or each group (30, 32).

13. Broadcasting apparatus according to claim 10 or claim 12, wherein each of the plurality of key parts has a corresponding different one-way function stored in or generated by the broadcasting server (12).

14. Broadcasting apparatus according to claim 13 as dependent on claim 12, wherein the one-way functions corresponding to the different one of the plurality of key parts, provided to each of the plurality of user devices (20) in one or more or each group (30, 32), are provided to, and/or stored by, each of the plurality of user devices (20) in one or more or each group (30, 32).

15. Broadcasting apparatus, or broadcasting server (12) according to claim 1 or any one of claims 3 to 14, wherein the broadcasting server (12) is configured to send the key parts to the user devices (20) via storage in a memory (23) of the key distribution centre (22).

16. Broadcasting apparatus, or broadcasting server (12) according to claim 9 or claim 10, or any one of claims 11 to 15 when dependent on claim 9 or 10, wherein the key distribution centre (22) is configured to send an alert to change key when a user device (20) leaves or joins the network.

17. Broadcasting apparatus, or broadcasting server (12) according to any one of claims 9, 10 or 16, wherein the key distribution centre (22) is configured to respond to a user device (20) leaving the network by allocating a new user device (20) to the group (30, 32) of which the user device (20) that has left was a part, by allocating a user device (20) to two groups (30, 32) including the group (30, 32) of which the user device (20) that has left was a part, or for the key distribution centre (22) to act as at least one device in the group providing one or more key parts to user devices (20) in the group (30,32) that are necessary to generate the decryption key but which are not known by any of the user devices (20) in the group (30, 32).

18. Broadcasting apparatus according to claim 17, wherein, when the key distribution centre (22) allocates a user device (20) to two groups (30,32) including the group of which the user device (20) that has left was a part, the key distribution centre (22) allocates, to the groups, a user device that has the same key part and/or one-way function in its memory that was in the memory (21) of the user device (20) that has left the network.

19. A method of encrypting data to be broadcast and decrypting the broadcast data comprising :

generating a plurality of key parts which together form an encryption key sending a first key part to a first user device (20), the first key part being one of the plurality of key parts,
sending a second key part to a second user device (20), the second key part being one of the plurality of key parts,
encrypting data for broadcast with the encryption key,
broadcasting the encrypted data to the first and second user devices (20),
decrypting the encrypted data at the first device (20) using a decryption key generated by obtaining the second key part from the second user device (20) and by compiling multiple key parts including the sent first key part and the second key part from the second user device (20),
and/or decrypting the encrypted data at the second device (20) using a decryption key generated by obtaining the first key part from the first user device (20) and by compiling multiple key parts including the sent second key part and the first key part from the first user device(20).

20. A computer program product or products containing one or more computer programs which when run on one or more computers result in the broadcasting server (12), the user device (20) or broadcasting apparatus of any of claims 1 to 18 or result in the one or more computers performing the method of claim 19.

21. A broadcasting server (12), broadcasting apparatus, user device (20), method or computer program product of any preceding claim wherein the broadcast encrypted data are packets of video.

22. A broadcasting server (12), broadcasting apparatus, user device (20), method or computer program product of any preceding claim wherein the broadcast encrypted data are packets of scalable video which are broadcast to a scalability server, scaled and then broadcast to user devices (20).

**Patentansprüche**

1. Broadcast-Server (12), der mit einer Vielzahl von Benutzergeräten (20) verbindbar ist und mit einem Key Distribution Centre (22) verbindbar ist oder ein Key Distribution Centre umfasst, wobei der Broadcast-Server (12) einen Prozessor und einen Speicherbaustein (13) umfasst,
wobei der Broadcast-Server (12) zum Generieren eines Verschlüsselungsschlüssels und einer Vielzahl von Schlüsselteilen, die zusammen den Verschlüsselungsschlüssel bilden, konfiguriert ist, und/oder der Speicherbaustein (13) des Broadcast-Servers (12) einen Verschlüsselungsschlüssel und eine Vielzahl von Schlüsselteilen enthält, die zusammen den Verschlüsselungsschlüssel bilden, wobei mehrere Schlüsselteile dazu benötigt werden, um einen Entschlüsselungsschlüssel, der mit dem Verschlüsselungsschlüssel identisch ist, zum Entschlüsseln von unter Nutzung des Verschlüsselungsschlüssels verschlüsselten Daten zu generieren,
wobei der Broadcast-Server (12) oder das Key Distribution Centre (22) zu Folgendem konfiguriert ist: Senden jedes der mehreren Schlüsselteile an mindestens ein korrespondierendes Benutzergerät (20), wobei nur ein Schlüsselteil an jedes Benutzergerät gesendet wird und wobei der Broadcast-Server (12) zum Verschlüsseln von Daten zum Rundsenden mit dem Verschlüsselungsschlüssel und zum Rundsenden der verschlüsselten Daten an die Vielzahl von Benutzergeräten (20) konfiguriert ist.

2. Benutzergerät (20) zum Empfangen verschlüsselter Daten, die durch einen Broadcast-Server (12), der mit einem Key Distribution Centre (22) und mit einem eine Gruppe (30, 32) aus einem oder mehreren weiteren Benutzergeräten (20) enthaltenden Netz verbindbar ist, rundgesendet werden,
wobei das Benutzergerät (20) einen Prozessor und einen Speicherbaustein (21) umfasst, wobei der Speicherbaustein (21) einen ersten Schlüsselteil enthält, wobei der erste Schlüsselteil einer von einer Vielzahl von Schlüsselteilen, die zusammen einen Entschlüsselungsschlüssel bilden, ist,
wobei das Benutzergerät (20) zu Folgendem konfiguriert ist:

Erhalten eines zweiten Schlüsselteils der Vielzahl von Schlüsselteilen von einem zweiten Benutzergerät (20) im Netz und Generieren eines Entschlüsselungsschlüssels durch Erstellen der Vielzahl von Schlüsselteilen, was Nutzen des ersten Schlüssels vom Speicherbaustein (21) und des zweiten Schlüsselteils vom zweiten Benutzergerät (20) enthält,
und Entschlüsseln verschlüsselter Daten, die vom Broadcast-Server (12) empfangen werden, unter Nutzung des generierten Entschlüsselungsschlüssels.

3. Broadcast-Vorrichtung, die einen Broadcast-Server (12), ein Key Distribution Centre (22) und ein Netz einer Gruppe von Benutzergeräten (20) umfasst, wobei der Broadcast-Server (12) dem Broadcast-Server gemäß Anspruch 1 entspricht und zum Rundsenden der Schlüsselteile an das Netz von Benutzergeräten (20) konfiguriert ist, und die Benutzergeräte (20) im Netz je einen Prozessor und einen Speicherbaustein (21) umfassen, wobei das Netz von Benutzergeräten (20) ein erstes Benutzergerät (20), das einen ersten Schlüsselteil enthält, vorzugsweise gemäß Anspruch 2, und ein zweites Benutzergerät (20) enthält, wobei der Speicherbaustein (21) des zweiten Benutzergeräts (20) vorzugsweise einen zweiten Schlüsselteil enthält, das erste Benutzergerät (20) zum Erhalten eines zweiten Schlüsselteils der Vielzahl von Schlüsselteilen vom zweiten Benutzergerät (20) und zum Generieren eines Entschlüsselungsschlüssels durch Erstellen mehrerer Schlüsselteile, was Nutzen des ersten Schlüssels vom Speicherbaustein (21) oder vom Key Distribution Centre (22) und des zweiten Schlüsselteils vom zweiten Benutzergerät (20) enthält, und zum Entschlüsseln verschlüsselter Daten, die vom Broadcast-Server (12) empfangen werden, unter Nutzung seines generierten Entschlüsselungsschlüssels konfiguriert ist,
das zweite Benutzergerät (20) zum Erhalten des ersten Schlüsselteils vom ersten Benutzergerät (20) und zum Generieren eines Entschlüsselungsschlüssels durch Erstellen mehrerer Schlüsselteile, was Nutzen des zweiten Schlüssels vom Speicherbaustein (21) oder vom Key Distribution Centre (22) und des ersten Schlüsselteils vom ersten Benutzergerät (22) enthält, und zum Entschlüsseln verschlüsselter Daten, die vom Broadcast-Server (12) empfangen werden, unter Nutzung seines generierten Entschlüsselungsschlüssels konfiguriert ist.

4. Broadcast-Vorrichtung gemäß Anspruch 3, wobei die durch das erste und das zweite Benutzergerät (20) generierten Entschlüsselungsschlüssel identisch oder funktional identisch sind.

5. Broadcast-Vorrichtung, Broadcast-Server (12) oder Benutzergerät (20) gemäß einem der vorhergehenden Ansprüche, wobei das Key Distribution Centre (22) ein integraler Bestandteil des Broadcast-Servers (12) ist oder wobei einige Bestandteile und/oder Funktionen des Key Distribution Centre (22) integral für den Broadcast-Server (12) sind und einige nicht.

6. Broadcast-Vorrichtung, Broadcast-Server (12) oder Benutzergerät (20) gemäß einem der Ansprüche 1 bis 4, wobei der Broadcast-Server (12) und das Key Distribution Centre (22) separate Einrichtungen in Kommunikation miteinander sind.

7. Broadcast-Vorrichtung, Broadcast-Server (12) oder Benutzergerät (20) gemäß einem der vorhergehenden Ansprüche, wobei die Vielzahl von Schlüsselteilen gemäß einem Secret-Sharing-Protokoll generiert wird, sodass es aufgrund der Kenntnis von nur einigen der Schlüsselteile, aus denen sich der Schlüssel zusammensetzt, nicht erheblich einfacher wird, den Schlüssel zu kalkulieren, oder wobei aufgrund der Kenntnis von mehr als einem Schlüsselteil, jedoch von weniger als der Anzahl, die zum Erstellen des Schlüssels erforderlich ist, nicht mehr Informationen als nur einer der Schlüsselteile gegeben werden.

8. Broadcast-Vorrichtung, Broadcast-Server (12) oder Benutzergerät (20) gemäß Anspruch 7, wobei die Vielzahl von Schlüsseln von dem Schlüssel, der einen Secret-Sharing-Algorithmus von Shamir nutzt, getrennt ist.

9. Broadcast-Vorrichtung oder Broadcast-Server (12) gemäß Anspruch 1 oder einem der Ansprüche 3 bis 8, wobei das Key Distribution Centre (22) zum Benachrichtigen des Broadcast-Servers (12) über das Ändern eines Verschlüsselungs- oder Entschlüsselungsschlüssels zu einer vorher festgelegten Zeit, zu einer zufälligen Zeit oder basierend auf einem erkannten Ereignis konfiguriert ist,
wobei der Broadcast-Server (12) zum Generieren von mindestens zwei Einweg-Funktionen konfiguriert ist und/oder der Speicherbaustein (13) des Broadcast-Servers (12) mindestens zwei Einweg-Funktionen enthält und dieser zum Reagieren auf das Empfangen einer Schlüsseländerungsbenachrichtigung vom Key Distribution Centre (22) durch Anwenden einer ersten Einweg-Funktion auf den ersten Schlüsselteil, um einen ersten modifizierten Schlüsselteil zu generieren, und einer zweiten Einweg-Funktion auf den zweiten Schlüsselteil, um einen zweiten modifizierten Schlüsselteil zu generieren, und zum Erstellen eines neuen Verschlüsselungsschlüssels aus einer Vielzahl von Schlüsselteilen, die den ersten modifizierten Schlüsselteil und den zweiten modifizierten Schlüsselteil enthalten, und zum Verschlüsseln rundzusendender Elemente mit dem neuen Verschlüsselungsschlüssel konfiguriert ist.

10. Broadcast-Vorrichtung gemäß Anspruch 9, wobei das Key Distribution Centre (22) zum Benachrichtigen von mindestens zwei der Benutzergeräte (20) über das Ändern eines Verschlüsselungs- oder Entschlüsselungsschlüssels zu einer vorher festgelegten Zeit, zu einer zufälligen Zeit oder basierend auf einem erkannten Ereignis konfiguriert ist, wobei der Speicherbaustein (21) des ersten Benutzergeräts (20) die erste Einweg-Funktion enthält und/oder der Broadcast-Server (12) zum Senden der ersten Einweg-Funktion der mindestens zwei Einweg-Funktionen an das erste Benutzergerät (20) konfiguriert ist, wobei der Speicherbaustein (21) des zweiten Benutzergeräts (20) die zweite Einweg-Funktion enthält oder der Broadcast-Server (12) zum Senden der zweiten Einweg-Funktion der mindestens zwei Zweite-Weg-Funktionen an das erste Benutzergerät (20) konfiguriert ist,
wobei das erste Benutzergerät (20) zum Kalkulieren des ersten modifizierten Schlüsselteils durch Anwenden der ersten Einweg-Funktion auf den ersten Schlüsselteil und zum Erhalten des zweiten modifizierten Schlüsselteils vom zweiten Benutzergerät (20), zum Generieren eines neuen Entschlüsselungsschlüssels durch Erstellen von Schlüsselteilen, die den ersten modifizierten Schlüssel aus seiner Kalkulation und den zweiten modifizierten Schlüsselteil vom zweiten Benutzergerät (20) enthalten, und zum Entschlüsseln von Daten vom Broadcast-Server (12) unter Nutzung des Entschlüsselungsschlüssels konfiguriert ist,
das zweite Benutzergerät (20) zum Kalkulieren des zweiten modifizierten Schlüsselteils durch Anwenden der zweiten Einweg-Funktion auf den zweiten Schlüsselteil und zum Erhalten des ersten modifizierten Schlüsselteils vom ersten Benutzergerät (20), zum Generieren eines neuen Entschlüsselungsschlüssels durch Erstellen von Schlüsselteilen, die den zweiten modifizierten Schlüssel aus seiner Kalkulation und den ersten modifizierten Schlüsselteil vom ersten Benutzergerät (20) enthalten, und zum Entschlüsseln von Daten vom Broadcast-Server (12) unter Nutzung des Entschlüsselungsschlüssels konfiguriert ist.

11. Broadcast-Vorrichtung gemäß Anspruch 9 oder Anspruch 10, die eine Vielzahl von Gruppen (30, 32) von Benutzergeräten (20) umfasst, wobei das erste und das zweite Benutzergerät (20) zum Erstellen der Vielzahl von Schlüsselteilen von anderen Geräten (20) in ihrer Gruppe (30, 32) konfiguriert sind, wobei jede Gruppe (30, 32) mindestens ein Benutzergerät (20), das zum Erstellen eines Entschlüsselungsschlüssels aus einer Vielzahl von Schlüsselteilen von anderen Geräten (20) in ihrer Gruppe (30, 32) konfiguriert ist, beinhaltet.

12. Broadcast-Vorrichtung gemäß Anspruch 11, wobei der Broadcast-Server (12) zum Bereitstellen eines anderen der Vielzahl von durch den Broadcast-Server (12) generierten oder gespeicherten Schlüsselteilen für jedes der Vielzahl von Benutzergeräten (20) in einer oder mehreren oder jeder Gruppe (30, 32) konfiguriert ist.

13. Broadcast-Vorrichtung gemäß Anspruch 10 oder Anspruch 12, wobei jeder der Vielzahl von Schlüsselteilen eine korrespondierende, andere Einweg-Funktion, die im Broadcast-Server (12) gespeichert ist oder durch den Broadcast-Server generiert wird, aufweist.

14. Broadcast-Vorrichtung gemäß Anspruch 13 in Abhängigkeit von Anspruch 12, wobei die Einweg-Funktionen, die mit dem anderen der Vielzahl von Schlüsselteilen korrespondieren, die für jedes der Vielzahl von Benutzergeräten (20) in einer oder mehreren oder jeder Gruppe (30, 32) bereitgestellt werden, für jedes der Vielzahl von Benutzergeräten (20) in einer oder mehreren oder jeder Gruppe (30, 32) bereitgestellt werden und/oder durch jedes der Vielzahl von Benutzergeräten in einer oder mehreren oder jeder Gruppe gespeichert werden.

15. Broadcast-Vorrichtung oder Broadcast-Server (12) gemäß Anspruch 1 oder einem der Ansprüche 3 bis 14, wobei der Broadcast-Server (12) zum Senden der Schlüsselteile über eine Speicherung in einem Speicherbaustein (23) des Key Distribution Centre (22) an die Benutzergeräte (20) konfiguriert ist.

16. Broadcast-Vorrichtung oder Broadcast-Server (12) gemäß Anspruch 9 oder Anspruch 10 oder einem der Ansprüche 11 bis 15 in Abhängigkeit von Anspruch 9 oder 10, wobei das Key Distribution Centre (22) zum Senden einer Benachrichtigung über eine Schlüsseländerung, wenn ein Benutzergerät (20) das Netz verlässt oder im Netz hinzukommt, konfiguriert ist.

17. Broadcast-Vorrichtung oder Broadcast-Server (12) gemäß Anspruch 9, 10 oder 16, wobei das Key Distribution Centre (22) zum Reagieren darauf, dass ein Benutzergerät (20) das Netz verlässt, durch Zuteilen eines neuen Benutzergeräts (20) zur Gruppe (30, 32), zu der das Benutzergerät (20), das das Netz verlassen hat, gehört hat, durch Zuteilen eines Benutzergeräts (20) zu zwei Gruppen (30, 32), die die Gruppe (30, 32) enthalten, zu der das Benutzergerät (20), das das Netz verlassen hat, gehört hat, konfiguriert ist, oder wobei das Key Distribution Centre (22) als mindestens ein Gerät in der Gruppe, das einen oder mehrere Schlüsselteile für Benutzergeräte (20) in der Gruppe (30, 32) bereitstellt, die zum Generieren des Entschlüsselungsschlüssels nötig, jeglichen der Benutzergeräte (20) in der Gruppe (30, 32) aber nicht bekannt sind, fungiert.

18. Broadcast-Vorrichtung gemäß Anspruch 17, wobei, wenn das Key Distribution Centre (22) ein Benutzergerät (20) zwei Gruppen (30, 32) zuteilt, die die Gruppe enthalten, zu der das Benutzergerät (20), das das Netz verlassen hat, gehört hat, das Key Distribution Centre (22) den Gruppen ein Benutzergerät zuteilt, das denselben Schlüsselteil und/oder dieselbe Einweg-Funktion in seinem Speicherbaustein aufweist, der bzw. die im Speicherbaustein (21) des Benutzergeräts (20), das das Netz verlassen hat, gewesen ist.

19. Verfahren zum Verschlüsseln rundzusendender Daten und zum Entschlüsseln der rundgesendeten Daten, das Folgendes umfasst:

    Generieren einer Vielzahl von Schlüsselteilen, die zusammen einen Verschlüsselungsschlüssel bilden,
    Senden eines ersten Schlüsselteils an ein erstes Benutzergerät (20), wobei der erste Schlüsselteil einer der Vielzahl von Schlüsselteilen ist,
    Senden eines zweiten Schlüsselteils an ein zweites Benutzergerät (20), wobei der zweite Schlüsselteil einer der Vielzahl von Schlüsselteilen ist,
    Verschlüsseln von Daten zum Rundsenden mit dem Verschlüsselungsschlüssel,
    Rundsenden der verschlüsselten Daten an das erste und das zweite Benutzergerät (20),
    Entschlüsseln der verschlüsselten Daten am ersten Gerät (20) unter Nutzung eines Entschlüsselungsschlüssels, der durch Erhalten des zweiten Schlüsselteils vom zweiten Benutzergerät (20) und durch Erstellen mehrerer Schlüsselteile, die den gesendeten ersten Schlüsselteil und den zweiten Schlüsselteil vom zweiten Benutzergerät (20) enthalten, generiert wird,
    und/oder Entschlüsseln der verschlüsselten Daten am zweiten Gerät (20) unter Nutzung eines Entschlüsselungsschlüssels, der durch Erhalten des ersten Schlüsselteils vom ersten Benutzergerät (20) und durch Erstellen mehrerer Schlüsselteile, die den gesendeten zweiten Schlüsselteil und den ersten Schlüsselteil vom ersten Benutzergerät (20) enthalten, generiert wird.

20. Computerprogrammprodukt oder -produkte, das/die ein oder mehrere Computerprogramme beinhaltet/ beinhalten, das/die beim Laufenlassen auf einem oder mehreren Computern zur Folge hat/haben, dass der Broadcast-Server (12), das Benutzergerät (20) oder die Broadcast-Vorrichtung gemäß einem der Ansprüche 1 bis 18 oder der eine oder die mehreren Computer das Verfahren gemäß Anspruch 19 durchführt/durchführen.

**21.** Broadcast-Server (12), Broadcast-Vorrichtung, Benutzergerät (20), Verfahren oder Computerprogrammprodukt gemäß einem vorhergehenden Anspruch, wobei die rundgesendeten, verschlüsselten Daten Videodatenpakete sind.

**22.** Broadcast-Server (12), Broadcast-Vorrichtung, Benutzergerät (20), Verfahren oder Computerprogrammprodukt gemäß einem vorhergehenden Anspruch, wobei die rundgesendeten, verschlüsselten Daten Datenpakete skalierbarer Videos sind, die an einen Skalierbarkeitsserver rundgesendet, skaliert und dann an Benutzergeräte (20) rundgesendet werden.

**Revendications**

**1.** Serveur de diffusion (12) pouvant être connecté à une pluralité de dispositifs utilisateurs (20) et pouvant être connecté à, ou comprenant un centre de distribution de clé (22), le serveur de diffusion (12) comprenant un processeur et une mémoire (13),

le serveur de diffusion (12) étant configuré pour générer une clé de cryptage et une pluralité de parties de clé formant ensemble la clé de cryptage, et/ou la mémoire (13) du serveur de diffusion (12) comprenant une clé de cryptage et une pluralité de parties de clé formant ensemble la clé de cryptage, dans lequel plusieurs parties de clé sont nécessaires pour générer une clé de décryptage identique à la clé de cryptage pour décrypter des données cryptées en utilisant la clé de cryptage,

le serveur de diffusion (12) ou le centre de distribution de clé (22) étant configuré pour : envoyer chacune des plusieurs parties de clé à au moins un dispositif utilisateur correspondant (20), dans lequel une seule partie de clé est envoyée à chaque dispositif utilisateur, et dans lequel le serveur de diffusion (12) est configuré pour crypter des données pour une diffusion avec la clé de cryptage et pour diffuser les données cryptées à ladite pluralité de dispositifs utilisateurs (20).

**2.** Dispositif utilisateur (20) pour recevoir des données cryptées diffusées par un serveur de diffusion (12) pouvant être connecté à un centre de distribution de clé (22) et à un réseau comprenant un groupe (30, 32) d'un ou de plusieurs autres dispositifs utilisateurs (20),

le dispositif utilisateur (20) comprenant un processeur et une mémoire (21), la mémoire (21) comprenant une première partie de clé, la première partie de clé étant l'une d'une pluralité de parties de clé formant ensemble une clé de décryptage,

le dispositif utilisateur (20) étant configuré pour :

obtenir une deuxième partie de clé de ladite pluralité de parties de clé à partir d'un deuxième dispositif utilisateur (20) dans ledit réseau et pour générer une clé de décryptage en compilant ladite pluralité de parties de clé comprenant l'utilisation de la première clé provenant de la mémoire (21) et de la deuxième partie de clé provenant dudit deuxième dispositif utilisateur (20), et

décrypter des données cryptées reçues dudit serveur de diffusion (12) en utilisant la clé de décryptage générée.

**3.** Appareil de diffusion, comprenant un serveur de diffusion (12), un centre de distribution de clé (22) et un réseau d'un groupe de dispositifs utilisateurs (20), le serveur de diffusion (12) étant conforme à la revendication 1 et configuré pour diffuser les parties de clé au réseau de dispositifs utilisateurs (20), et

les dispositifs utilisateurs (20) dans le réseau comprennent chacun un processeur et une mémoire (21), le réseau de dispositifs utilisateurs (20) comprenant un premier dispositif utilisateur (20) comprenant une première partie de clé, de préférence selon la revendication 2, et un deuxième dispositif utilisateur (20), la mémoire (21) du deuxième dispositif utilisateur (20) comprenant de préférence une deuxième partie de clé, le premier dispositif utilisateur (20) étant configuré pour obtenir une deuxième partie de clé de ladite pluralité de parties de clé à partir du deuxième dispositif utilisateur (20) et pour générer une clé de décryptage en compilant plusieurs parties de clé comprenant l'utilisation de la première clé provenant de la mémoire (21) ou du centre de distribution de clé (22) et de la deuxième partie de clé provenant du deuxième utilisateur (20), et pour décrypter des données cryptées reçues dudit serveur de diffusion (12) en utilisant sa clé de décryptage générée,

le deuxième dispositif utilisateur (20) est configuré pour obtenir la première partie de clé du premier dispositif utilisateur (20) et pour générer une clé de décryptage en compilant plusieurs parties de clé comprenant l'utilisation de la deuxième clé provenant de la mémoire (21) ou du centre de distribution de clé (22) et de la première partie de clé provenant du premier dispositif utilisateur (22), et pour décrypter des données cryptées reçues dudit serveur de diffusion (12) en utilisant sa clé de décryptage générée.

**4.** Appareil de diffusion selon la revendication 3, dans lequel les clés de décryptage générées par les premier et deuxième dispositifs utilisateurs (20) sont identiques ou identiques sur le plan fonctionnel.

5. Appareil de diffusion, serveur de diffusion (12) ou dispositif utilisateur (20) selon l'une quelconque des revendications précédentes, dans lequel le centre de distribution de clé (22) fait partie intégrante du serveur de diffusion (12) ou dans lequel certaines parties et/ou fonctions du centre de distribution de clé (22) sont intégrées au serveur de diffusion (12) et certaines ne le sont pas.

6. Appareil de diffusion, serveur de diffusion (12) ou dispositif utilisateur (20) selon l'une quelconque des revendications 1 à 4, dans lequel le serveur de diffusion (12) et le centre de distribution de clé (22) sont des dispositifs séparés en communication les uns avec les autres.

7. Appareil de diffusion, serveur de diffusion (12) ou dispositif utilisateur (20) selon l'une quelconque des revendications précédentes, dans lequel la pluralité de parties de clé est générée selon un protocole de partage de secret de sorte que la connaissance de seulement certaines des parties de clé composant ensemble la clé ne facilite pas de manière significative le calcul de la clé, ou dans lequel la connaissance de plus d'une partie de clé mais moins que le nombre nécessaire pour compiler la clé ne fournit pas plus d'informations qu'une partie unique des parties de clé.

8. Appareil de diffusion, serveur de diffusion (12) ou dispositif utilisateur (20) selon la revendication 7, dans lequel la pluralité de clés est divisée à partir de la clé en utilisant un algorithme de partage de secret de Shamir.

9. Appareil de diffusion ou serveur de diffusion (12) selon la revendication 1 ou l'une quelconque des revendications 3 à 8, dans lequel le centre de distribution de clé (22) est configuré pour alerter le serveur de diffusion (12) pour qu'il change de clé de cryptage ou de décryptage à un moment prédéterminé, à un moment aléatoire ou sur la base d'un événement détecté,
dans lequel le serveur de diffusion (12) est configuré pour générer au moins deux fonctions unidirectionnelles et/ou la mémoire (13) du serveur de diffusion (12) comprend au moins deux fonctions unidirectionnelles, et est configuré pour répondre à la réception d'une alerte de changement de clé du centre de distribution de clé (22) en appliquant une première fonction unidirectionnelle à la première partie de clé pour générer une première partie de clé modifiée et une deuxième fonction unidirectionnelle à la deuxième partie de clé pour générer une deuxième partie de clé modifiée, et pour compiler une nouvelle clé de cryptage à partir d'une pluralité de parties de clé comprenant la première partie de clé modifiée et la deuxième partie de clé modifiée et pour crypter des éléments à diffuser avec la nouvelle clé de cryptage.

10. Appareil de diffusion selon la revendication 9, dans lequel le centre de distribution de clé (22) est configuré pour alerter au moins deux des dispositifs utilisateurs (20) pour qu'ils changent de clé de cryptage ou de décryptage à un moment prédéterminé, à un moment aléatoire ou sur la base d'un événement détecté, la mémoire (21) du premier dispositif utilisateur (20) comprenant la première fonction unidirectionnelle et/ou
le serveur de diffusion (12) est configuré pour envoyer la première fonction unidirectionnelle des au moins deux fonctions unidirectionnelles au premier dispositif utilisateur (20), la mémoire (21) du deuxième dispositif utilisateur (20) comprenant la deuxième fonction unidirectionnelle, ou le serveur de diffusion (12) est configuré pour envoyer la deuxième fonction unidirectionnelle des au moins deux deuxièmes fonctions directionnelles au premier dispositif utilisateur (20),
dans lequel le premier dispositif utilisateur (20) est configuré pour calculer la première partie de clé modifiée en appliquant la première fonction unidirectionnelle à la première partie de clé et pour obtenir la deuxième partie de clé modifiée du deuxième dispositif utilisateur (20), pour générer une nouvelle clé de décryptage en compilant des parties de clé comprenant la première clé modifiée provenant de son calcul et la deuxième partie de clé modifiée provenant du deuxième dispositif utilisateur (20), et pour décrypter des données du serveur de diffusion (12) en utilisant la clé de décryptage,
le deuxième dispositif utilisateur (20) est configuré pour calculer la deuxième partie de clé modifiée en appliquant la deuxième fonction unidirectionnelle à la deuxième partie de clé et pour obtenir la première partie de clé modifiée du premier dispositif utilisateur (20), pour générer une nouvelle clé de décryptage en compilant des parties de clé comprenant la deuxième clé modifiée provenant de son calcul et la première partie de clé modifiée provenant du premier dispositif utilisateur (20), et pour décrypter des données du serveur de diffusion (12) en utilisant la clé de décryptage.

11. Appareil de diffusion selon la revendication 9 ou la revendication 10, comprenant une pluralité de groupes (30, 32) de dispositifs utilisateurs (20), les premier et deuxième dispositifs utilisateurs (20) étant configurés pour compiler la pluralité de parties de clé provenant d'autres dispositifs (20) dans leur groupe (30, 32), chaque groupe (30, 32) contenant au moins un dispositif utilisateur (20) qui est configuré pour compiler une clé de décryptage à partir d'une pluralité de parties de clé provenant d'autres dispositifs (20) dans leur groupe (30, 32).

12. Appareil de diffusion selon la revendication 11, dans lequel le serveur de diffusion (12) est configuré pour fournir une partie différente de la pluralité de parties de clé générées ou stockées par le serveur de diffusion (12) à chacun de la pluralité de dispositifs utilisateurs (20) dans un ou plusieurs ou chaque groupe(s) (30, 32).

13. Appareil de diffusion selon la revendication 10 ou 12, dans lequel chacune de la pluralité de parties de clé présente une fonction unidirectionnelle différente correspondante stockée sur ou générée par le serveur de diffusion (12).

14. Appareil de diffusion selon la revendication 13 comme dépendant de la revendication 12, dans lequel les fonctions unidirectionnelles correspondant à la partie différente de la pluralité de parties de clé, fournie à chacun de la pluralité de dispositifs utilisateurs (20) dans un ou plusieurs ou chaque groupe(s) (30, 32), sont fournies à et/ou stockées par chacun de la pluralité de dispositifs utilisateurs (20) dans un ou plusieurs ou chaque groupe(s) (30, 32).

15. Appareil de diffusion ou serveur de diffusion (12) selon la revendication 1 ou l'une quelconque des revendications 3 à 14, dans lequel le serveur de diffusion (12) est configuré pour envoyer les parties de clé aux dispositifs utilisateurs (20) par un stockage dans une mémoire (23) du centre de distribution de clé (22).

16. Appareil de diffusion ou serveur de diffusion (12) selon la revendication 9 ou 10 ou l'une quelconque des revendications 11 à 15 comme dépendant de la revendication 9 ou 10, dans lequel le centre de distribution de clé (22) est configuré pour envoyer une alerte pour changer de clé lorsqu'un dispositif utilisateur (20) quitte ou rejoint le réseau.

17. Appareil de diffusion ou serveur de diffusion (12) selon l'une quelconque des revendications 9, 10 ou 16, dans lequel le centre de distribution de clé (22) est configuré pour répondre à un dispositif utilisateur (20) quittant le réseau en allouant un nouveau dispositif utilisateur (20) au groupe (30, 32) dont faisait partie le dispositif utilisateur (20) qui vient de quitter, en allouant un dispositif utilisateur (20) à deux groupes (30, 32) comprenant le groupe (30, 32) dont faisait partie le dispositif utilisateur (20) qui vient de quitter, ou pour que le centre de distribution de clé (22) agisse comme au moins un dispositif dans le groupe fournissant une ou plusieurs parties de clé à des dispositifs utilisateurs (20) dans le groupe (30, 32) qui sont nécessaires pour générer la clé de décryptage mais qui ne sont connues d'aucun des dispositifs utilisateurs (20) dans le groupe (30, 32).

18. Appareil de diffusion selon la revendication 17, dans lequel, lorsque le centre de distribution de clé (22) alloue un dispositif utilisateur (20) à deux groupes (30, 32) comprenant le groupe dont faisait partie le dispositif utilisateur (20) qui vient de quitter, le centre de distribution de clé (22) alloue aux groupes un dispositif utilisateur qui comporte la même partie de clé et/ou de fonction unidirectionnelle dans sa mémoire qui se trouvait dans la mémoire (21) du dispositif utilisateur (20) qui vient de quitter le réseau.

19. Procédé de cryptage de données à diffuser et de décryptage des données diffusées, comprenant les étapes consistant à :

générer une pluralité de parties de clé formant ensemble une clé de cryptage,
envoyer une première partie de clé à un premier dispositif utilisateur (20), la première partie de clé étant l'une de la pluralité de parties de clé,
envoyer une deuxième partie de clé à un deuxième dispositif utilisateur (20), la deuxième partie de clé étant l'une de la pluralité de parties de clé,
crypter des données pour une diffusion avec la clé de cryptage,
diffuser les données cryptées aux premier et deuxième dispositifs utilisateurs (20),
décrypter les données cryptées au niveau du premier dispositif (20) en utilisant une clé de décryptage générée en obtenant la deuxième partie de clé du deuxième dispositif utilisateur (20) et en compilant plusieurs parties de clé comprenant la première partie de clé envoyée et la deuxième partie de clé provenant du deuxième dispositif utilisateur (20), et/ou
décrypter les données cryptées au niveau du deuxième dispositif (20) en utilisant une clé de décryptage générée en obtenant la première partie de clé provenant du premier dispositif utilisateur (20) et en compilant plusieurs parties de clé comprenant la deuxième partie de clé envoyée et la première partie de clé provenant du premier dispositif utilisateur(20).

20. Produit(s) de programme informatique contenant un ou plusieurs programmes informatiques qui, lorsqu'ils sont exécutés sur un ou plusieurs ordinateurs, aboutissent au serveur de diffusion (12), au dispositif utilisateur (20) ou à l'appareil de diffusion selon l'une quelconque des revendications 1 à 18 ou font qu'un ou plusieurs ordinateurs effectuent le procédé selon la revendication 19.

21. Serveur de diffusion (12), appareil de diffusion, dispositif utilisateur (20), procédé ou produit de programme informatique selon l'une quelconque des revendications précédentes, dans lequel les données cryptées diffusées sont des paquets vidéo.

22. Serveur de diffusion (12), appareil de diffusion, dispositif utilisateur (20), procédé ou produit de programme informatique selon l'une quelconque des revendications précédentes, dans lequel les données cryptées diffusées sont des paquets de vidéo adaptable qui sont diffusés à un serveur d'adaptabilité, adaptés et ensuite diffusés aux dispositifs utilisateurs (20).

# Fig.1.

# Fig.2.

# Fig.3.

100

| Video Source | Scalable Server | Key Distribution Centre | End User |
|---|---|---|---|

**Video Source:**
- Generate keys S101
- Encrypt video S104
- Broadcast video S112

**Scalable Server:**
- Receive video S114
- Broadcast to end user S116

**Key Distribution Centre:**
- Receive key pairs and hash function from video source S102
- Associate key pairs and hashs with users S106

**End User:**
- User registration S108
- Key generation S110
- Receive video S118
- Decrypt video S120
- S122

EP 2 274 867 B1

200

# Fig.4.

| Scalability Server 16 | KDC 22 | Subscriber 20 |
|---|---|---|
| Receive request S201 | | |
| Send secret key and reg number S202 | | Receive secret key and reg number S204 |
| | Is number correct S208 | Send reg number using secret key S206 |
| | Reject S210 (No) | |
| | Assign key part S214 (Yes) | Receive addresses S212 (Yes) |
| | | Receive key part S216 |
| | | Store key part S218 |

300

# Fig.5.

| Video Server 12 | KDC 22 | Subscriber 20 |
|---|---|---|

```
Receive
alert
S306
```

```
Send alert
S302
```

```
Receive alert
S304
```

```
Change
group key
S308
```

```
Apply hash function
to key part
S310
```

```
Regenerate
group key
S312
```

```
Increment count
of key
regenerations
S314
```

# Fig.6.

*400*

| Video Server 12 | KDC 22 | Subscriber 20 |
|---|---|---|

**Video Server 12**

Receive request S201

Send secret key and reg number S202

**KDC 22**

Send alert S402

→ Are any groups short ? S404 — No → End S406

Yes ↓

See 100 S410 ← Yes — Any new regs ? S408 — Yes → Join second group S414

No ↓

KDC joins group S412

↓

Yes — Any new regs ? S416

No ↓

Time delay

**Subscriber 20**

Receive secret key and reg number S204

↓

Send reg number using secret key S206

25

**EP 2 274 867 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5903649 A
- WO 2007049267 A